# FASCICULE DE BREVET EUROPEEN

(11) **EP 2 245 729 B1**
(45) Date de publication et mention de la délivrance du brevet: **10.09.2014**
(21) Numéro de dépôt: 09716653.2
(22) Date de dépôt: 21.01.2009
(51) Int. Cl.: H02M 7/10, H02M 7/25

(54) **CIRCUIT ET SYSTEMES REDRESSEURS DE PUISSANCE, PROCÈDE ASSOCIE, AÉRONEF COMPRENANT DE TELS CIRCUIT OU SYSTEMES**
SCHALTUNG UND LEISTUNGSGLEICHRICHTERYSTEME, ENTSPRECHENDES VERFAHREN, SOLCHE SCHALTUNG ODER SYSTEME ENTHALTENDES FLUGGERÄT
POWER RECTIFYING CIRCUIT AND SYSTEMS, ASSOCIATED METHOD, AND AIRCRAFT INCLUDING SUCH CIRCUIT OR SYSTEMS

(30) Priorité: 31.01.2008 FR 0850622
(43) Date de publication de la demande: 03.11.2010
(73) Titulaire: Airbus Operations, 31060 Toulouse (FR); Centre National de la Recherche Scientifique, 75016 Paris (FR); Institut National Polytechnique De Toulouse - INPT, 31029 Toulouse Cedex 4 (FR)
(72) Inventeur: ITURRIZ , Marcelo, Fernando, F-31410 Lavernose-Lacasse (FR); RICHARDEAU, Frédéric, F-31130 Flourens (FR); MEYNARD, Thierry, F-31700 Beauzelle (FR); HELALI, Hassan, F-65000 Tarbes (FR)
(74) Mandataire: Santarelli
(86) Numéro de dépôt international: PCT/FR2009/000063
(87) Numéro de publication internationale: WO 2009/109714

(56) Documents cités:
- FR-A- 2 881 896
- FR-A- 2 897 731
- JP-A- 7 194 100
- JP-A- 11 069 786
- JP-A- 2005 073 440
- JP-A- 2005 117 873
- JP-A- 2005 328 646
- US-A- 5 119 283
- US-A- 6 147 882

## Description

La présente invention concerne un dispositif et un procédé redresseur de puissance, un système associé et un aéronef comprenant un tel dispositif et/ou système.

Dans le domaine de la conversion et du réglage de l'énergie électrique par des circuits électroniques de puissance, de nombreuses applications requièrent une fonctionnalité de type redresseur courant alternatif/courant continu (AC/DC) où le côté AC effectue un prélèvement sinusoïdal du courant en phase avec les tensions du réseau d'alimentation, afin d'optimiser le facteur de puissance au plus près de 1, et d'obtenir un rendement énergétique optimum et/ou de respecter des normes de qualités du réseau de distribution. Le côté DC constitue la sortie de tels circuits. L'alimentation côté AC d'un tel réseau alternatif peut, par exemple, être un système de génération électrique embarqué dans un aéronef pour alimenter un réseau de bord et tel que décrit dans les demandes FR-2 881 896 et FR-2 897 731. Notamment, l'étage DC peut lui-même alimenter un convertisseur DC/DC ou DC/AC, par exemple un onduleur-moteur ou une alimentation de secours.

Les développements en électronique de puissance ont mis en avant les performances des convertisseurs AC/DC redresseurs actifs à découpage associés à des techniques de modulation par largeur d'impulsions (PWM acronyme de *"Pulse Width Modulation*" selon la terminologie anglo-saxonne). Ces circuits sont essentiellement à base de semi-conducteurs de puissance dont la modulation par impulsions permet de régler le flux de puissance prélevé sur le réseau alternatif. Ces circuits permettent également de réguler la tension continue DC en sortie, notamment en vue d'alimenter d'autres convertisseurs DC/DC ou DC/AC.

Des solutions connues à ce jour présentent une modulation à deux niveaux de tension ayant par conséquent l'inconvénient de nécessiter des inductances côté AC de forte valeur et un encombrement important en poids.

Des solutions connues utilisent des cellules de commutation symétriques dites "standardisées", sous la forme d'un onduleur de tension, dotées de deux ensembles transistor-diode (dual transistor-diode) commandés par des générateurs PWM. On connaît par exemple deux transistors-diodes en série sur une source de tension continue E.

De tels circuits ont l'avantage d'être polyvalents et modulaires mais restent néanmoins rapidement complexes à cause du nombre élevé de transistors et de commandes électroniques appliquées aux transistors. En outre, ces systèmes apparaissent moins fiables qu'un redresseur passif à diodes et présentent des pertes de puissance nettement supérieures en raison de la présence de deux fois plus de composants qui engendrent en moyenne des pertes supplémentaires dues aux commutations haute-fréquence, et un calibrage en tension des composants important, typiquement 1200 V dans l'industrie.

Par ailleurs, ces systèmes s'appuient sur un découpage de tension sur deux niveaux (c'est-à-dire offrant deux niveaux de tension continue du côté AC: -E/2 V et E/2 V), impliquant l'usage, en entrée de redresseur, d'inductances de lissage du courant AC de valeur importante fonction des volts-secondes (proportionnels à la tension E multipliée par la période de découpage Tdec, où E désigne la tension DC et Tdec (respectivement Fdec) représente la période (respectivement fréquence) de découpage). Il en résulte un encombrement important en terme de poids et de volume.

Dans ces circuits classiques, les cellules de commutation sont composées de deux transistors en série. La défaillance en basse impédance (ou le court-circuit) de l'un d'entre eux se traduit par la mise en court-circuit du bus continu dans lequel une forte énergie peut être stockée, notamment plusieurs centaines de joules. Cette énergie peut être suffisante pour amener l'explosion des boîtiers si une protection rapide n'est pas activée sur les transistors.

Même en présence de cette protection, ce type de défaut peut se propager au réseau d'alimentation et aux autres cellules adjacentes du circuit, ce qui implique d'adjoindre au circuit, des dispositifs supplémentaires d'isolement et de redondance pour sécuriser la portion de circuit défaillante et poursuivre la gestion de l'énergie en mode secours.

Les circuits résultant présentent alors rapidement des montages plus complexes, plus coûteux et probablement avec un risque de défiabilisation par rapport à un simple redresseur passif à diodes.

Il existe donc un besoin de disposer de circuits redresseurs tolérants aux pannes, à la fois sûrs, performants du point de vue des volts-secondes appliqués aux inductances et utilisant des interrupteurs de faible tension de calibre.

Une partie des inconvénients ci-dessus disparaît lorsque l'on s'intéresse au cas particulier où la réversibilité en puissance n'est pas requise, interdite ou impossible, par exemple dans le cas où le réseau d'alimentation initial est de type alternatif en vue de fournir un bus de courant continu unidirectionnel en puissance. Un réseau embarqué dans un aéronef présente généralement ces caractéristiques, où un générateur alternatif fournit l'énergie électrique à l'ensemble de l'aéronef.

En l'absence de réversibilité, on obtient une simplification des circuits à découpage, les cellules de commutation peuvent ne plus être réversibles en courant et alors ne comporter plus qu'un seul transistor et une seule diode, donc un nombre réduit de transistors et de moyens de commande des transistors. Il en résulte un coût moindre, des risques réduits de défaut de commande du circuit et des pertes de puissance plus faibles. De tels circuits sont ainsi adaptés pour des applications/équipements requerrant des puissances sur une large gamme et des tensions industrielles, par exemple de 300 V à 1200 V, typiquement 800 V.

Les circuits ainsi obtenus sont classiquement désignés par circuit PFC (*"Power Factor Correction"* ou correction de facteur de puissance) ou redresseur-"boost" (élévateur) à prélèvement sinusoïdal.

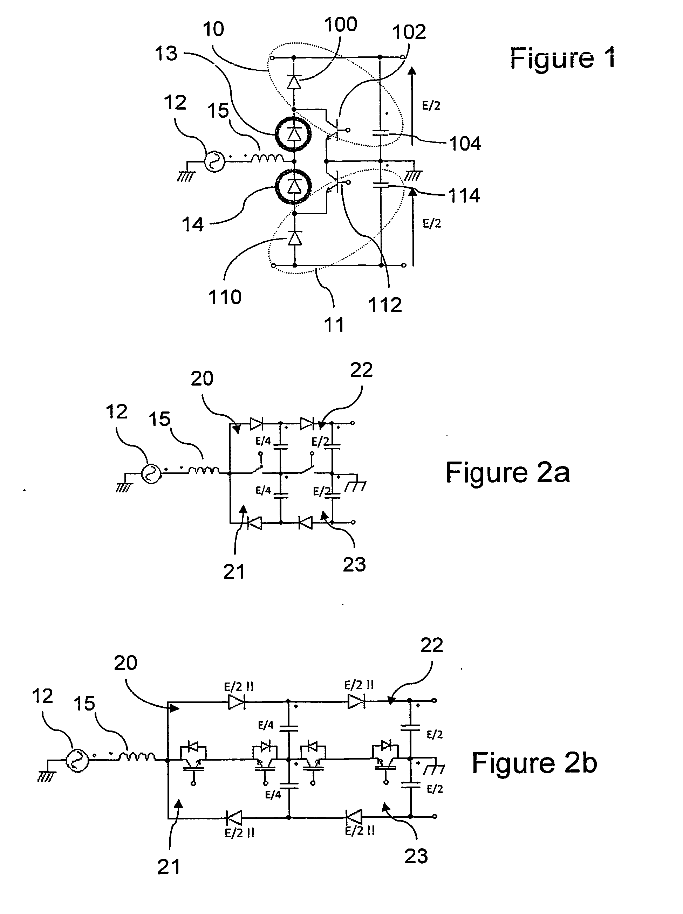

Les redresseurs-boost utilisent comme base, dans le cas d'une alimentation triphasée, un pont à six diodes ou trois branches de redresseurs à 2 ou 4 diodes (pour l'ensemble des trois phases de la source d'alimentation) associées à un circuit boost simple ou double. En **figure 1****,** on a représenté un circuit double-boost à redresseur 2 diodes et qui présente trois niveaux de tension côté AC ce qui permet de diviser par 2 les volts-secondes dimensionnant les inductances. Ce circuit est notamment décrit dans la thèse Barbosa *("*Three-Phase Power Factor Correction Circuits for Low-Cost Distributed Power Systems", Peter Mantovanelli Barbosa - rapport de Thèse soutenue à la faculté de the Virginia Polytechnic Institute and State University, July 31, 2002, Blacksburg, Virginia).

On observe deux cellules *boost* unidirectionnelles en courant 10 et 11 reliées chacune à l'alimentation alternative 12 par des diodes de redressement 13 et 14 et une inductance 15. Chaque cellule boost se compose d'une diode 100 ou 110, d'un interrupteur 102 ou 112 et d'un condensateur 104 ou 114 (définissant un bus de tension continue DC). Dans la suite, on nomme indifféremment "composant d'une cellule *boost*" et "composant *boost*", par exemple une diode *boost.*

Ce circuit fonctionne à une fréquence de découpage Fdec correspondant à la fréquence de répétition des ordres de commande sur les transistors-interrupteurs.

Ces solutions apportent une simplification des circuits de découpage accompagnée d'une diminution des inductances 15 d'entrée notamment grâce à l'apparition d'un troisième niveau (ici, on obtient côté AC les niveaux de tensions -E/2, 0 et E/2) qui permet d'utiliser des inductances réduites de moitié.

On obtient également une tenue en tension de l'ensemble des composants (diodes *boost* et transistors) réduite de moitié ainsi qu'un calibrage avec marge de tolérance de ces composants réduit d'autant, passant de 1200V à 600V.

Le circuit de la **figure 1** est déjà une première étape vers une plus grande sûreté de fonctionnement. En effet, tout défaut sur un des deux transistors est spontanément isolé par les diodes de *boost.* La mise en court-circuit du bus DC est ainsi évitée dans un tel scénario.

Toutefois, le défaut est reporté sur la phase AC et un isolement, par exemple par fusible ou thyristor, est à opérer.

On remarque, néanmoins, que l'isolement d'une des deux cellules *boost* condamne le circuit à ne fonctionner que durant une seule demi-période de l'onde d'entrée côté AC.

Une solution à cette limitation est connue, notamment par la demande de brevet FR 2 809 548, qui introduit une redondance topologique en décrivant un circuit redresseur-boost multi-niveaux, dont un cas particulier est à cinq niveaux. On a représenté en **figures 2a** et **2b** deux schémas équivalents illustrant la topologie de ce circuit redresseur connu.

Ce circuit comprend quatre cellules *boost* 20 à 23. Le premier étage formé des cellules 20 et 21 reprend la topologie du circuit de la figure 1 (en l'absence des diodes de redressement 13 et 14). Un deuxième étage identique (cellules 22 et 23) a été ajouté à la suite du premier étage, créant de la sorte globalement côté AC cinq niveaux de tension en sortie: -E/2; -E/4; 0; E/4; E/2.

On observe que la mise en cascade d'un étage identique permet de réduire par 2 le calibrage et d'utiliser des tensions standard de 600V uniquement.

La présence du deuxième étage permet de doubler la fréquence de découpage à 2.Fdec. Des fréquences jusqu'à quelques centaines de kilo-hertz sont ainsi possibles permettant une augmentation de la bande-passante utile si le réseau AC est de fréquence élevée et une diminution des volts-secondes appliqués aux inductances implique une diminution des dimensions des composants passifs, notamment de l'inductance 15 d'entrée. Cette dernière réduction permet notamment d'appliquer des tensions réduites aux composants pour une même tension d'alimentation et donc de sous-dimensionner les composants (gains économiques), ou, à même calibre, d'accepter des tensions d'alimentation bien supérieures.

La fréquence de découpage accrue permet également de diminuer la valeur des capacités dans les cellules *boost,* ayant pour conséquence qu'une plus petite quantité d'énergie est stockée dans le circuit. Ainsi, lorsqu'une diode *boost* casse et que le transistor de la cellule provoque la mise en court-circuit de la capacité, le risque d'explosion est rapidement écarté.

En outre, lorsqu'un transistor casse, le circuit est sécurisé par la présence de la diode *boost* et l'énergie est dissipée par recyclage vers les sources AC. On accroît ainsi la sécurité d'un tel système

Cette solution présente également l'avantage d'être tolérante aux pannes. En effet, en cas de défaut d'un transistor interrupteur, par exemple celui de la cellule 20, l'autre étage, ici la cellule 22, continue de découper cette fois-ci à la fréquence de découpage Fdec (car elle maintient le découpage sur l'alternance active du courant d'alimentation malgré la cellule défaillante). En cas de défaillance d'un interrupteur, on perd ainsi, au prix d'une surtension statique (c'est-à-dire aux bornes des diodes) de 50% et dynamique (c'est-à-dire aux bornes des interrupteurs/transistors) de 100%, un niveau de tension en sortie et on passe à une fréquence de découpage simple pour la partie supérieure ou inférieure affectée par cette défaillance.

On observe que, dans cette solution, les diodes dans les cellules *boost* 20 à 23 doivent être dimensionnées pour la totalité des tensions différentielles de la cellule, donc de calibre en tension égale à E/2 (E/4+E/4 pour le premier étage et E/2+E/2-E/4-E/4 pour le deuxième étage). Ainsi, pour une tension de sortie E=800 V appliquée dans l'industrie, il convient d'utiliser des diodes calibrées à au moins 400 V, généralement 600 V en incluant une marge.

Cette solution présente cependant l'inconvénient qu'en cas de défaillance des interrupteurs, les diodes de cellules *boost* sont soumises à une tension statique de 3E/4 (+50%), soit 600 V dans l'exemple ci-dessus, et à une tension dynamique de E/2 (+100%) soit 400 V. Ainsi, en présence de diodes calibrées à 600 V incluant une marge de sécurité, le circuit n'est pas tolérant aux pannes. Ainsi, pour obtenir une tolérance aux pannes, un dimensionnement d'au moins 600V (c'est-à-dire sans marge) des composants est alors indispensable, notamment un dimensionnement des diodes a *minima* à 800 V incluant une marge, soit au-delà des tensions de sortie E/2 utilisées.

Pour éviter un fonctionnement limite à 600 V, un calibrage en tension de 800 voire 1200 V est donc nécessaire mais pénalise les performances en vitesse de commutation, en chute de tension et en perte de puissance des diodes

En outre, un autre inconvénient de cette structure réside dans le fait que les cellules de commutation comportent une diode et deux paires de transistor/diode dont l'une de ces dernières est statique. Cela implique des inductances parasites plus élevées que dans les circuits précédents.

Au regard de ces inconvénients, on cherche à obtenir un circuit redresseur de puissance qui soit intrinsèquement, c'est-à-dire sans l'ajout de circuits supplémentaires, tolérant aux défaillances des interrupteurs et diodes, et qui requière des diodes et des interrupteurs (transistors) de calibre réduit pour de mêmes tensions de sortie.

Il est par ailleurs connu, de la publication JP2005073440, une alimentation électrique disposant d'une pluralité de circuits redresseurs pour redresser une tension en des tensions continues d'alimentation.

L'invention vise notamment à résoudre les inconvénients susmentionnés en fournissant un circuit redresseur de tension multi-niveaux à tolérance de panne comprenant des cellules *boost,* notamment à un seul transistor et une seule diode par cellule.

Notamment, une cellule boost assure le découpage malgré la défaillance à l'intérieur d'une autre cellule boost, ce qui garantit une tolérance aux défaillances d'interrupteurs ou de diodes.

En outre, le circuit selon l'invention permet de faire fonctionner les diodes sous une tension de E/4 (c'est-à-dire 200 V pour une source de tension de 800 V) et ainsi de requérir, en cas de défaillance, un calibrage de E/2 (c'est-à-dire 400 V), soit la tension de sortie. Ainsi, des composants de calibration 600 V sont donc possibles avec une marge de fonctionnement raisonnable.

A cet effet, l'invention vise notamment un circuit redresseur de puissance tel que défini dans la revendication 1.

Notamment, la borne en commun est la deuxième sortie pour chacun des ensembles de commutation.

La notion d'entrée/sortie des cellules telle qu'utilisée ci-dessus est indépendante du sens du courant traversant le circuit, notamment parce que l'un des ensembles de commutation est parcouru en sens inverse de l'autre alors qu'ils présentent une structure sensiblement symétrique.

On entend par "distinct" le fait que, pour chacun des ensembles de commutation, les cellules *boost* correspondantes (c'est-à-dire du même étage au sens des figures 2a et 2b) de la partie supérieure (premier ensemble de commutation) et de la partie inférieure (deuxième ensemble) ne partagent pas de composants. Il en résulte l'absence de report de contrainte ("*stress"* selon la terminologie anglo-saxonne) en tension pour les composants entre les ensembles, et donc un confinement meilleur.

Cette "distinction" des ensembles de commutation permet également de diminuer le couplage thermique du circuit par rapport à celui de la figure 2b. En effet, dans ce dernier, les deux paires de transistors/diodes dont l'une est statique nécessitent qu'elles soient positionnées de façon proche géographiquement afin de créer le minimum d'inductance parasite. Le revers de cette nécessité est un couplage thermique important de ces deux paires, lequel disparaît grâce à l'invention.

Egalement, l'invention permet d'utiliser des transistors interrupteurs et des diodes dans les cellules *boost* sous tension E/4, soit 200 V dans l'exemple ci-dessus, pour un schéma à 2x2 cellules, au contraire des circuits de l'état de la technique. En cas de défaillance, les diodes des cellules *boost* sont au plus soumises à des tensions de E/2, soit la tension de sortie. Ainsi, en diminuant le calibrage d'un facteur 2 par rapport aux solutions connues, on obtient des composants plus rapides et présentant moins de pertes de puissance.

La fréquence de découpage et le nombre de tensions côté AC sont multipliés, notamment en fonction du nombre de cellules imbriquées, c'est-à-dire du nombre d'étages ou groupes. On peut ainsi réduire efficacement les volts-secondes appliqués à l'inductance d'entrée (et donc sa taille) et les voltsampères VA silicium commutés, par rapport à l'état de l'art, où les VA silicium commutés se définissent comme la somme des produits entre la tension aux bornes et le courant circulant dans chacun des transistors interrupteurs des cellules du circuit.

Notamment, l'invention, dans sa configuration à 2 x 2 cellules permet de diviser dans un rapport de 2 à 8 la valeur de l'inductance en entrée, dans un rapport 2 les Volts-Ampères silicium commutés et enfin de réduire de l'ordre de 30% les pertes par rapport aux solutions de l'art antérieur avec le même nombre de transistors, c'est-à-dire le même niveau de complexité.

Ainsi, on prévoit que chaque ensemble de commutation peut comprendre deux cellules *boost.* Cette configuration offre un bon compromis entre une inductance d'entrée faible et un nombre de transistors raisonnable, limitant ainsi l'énergie globale stockée (comparé à la présence de N cellules *boost,* soit 2N capacités si N»2).

En alternative, il est possible qu'un ensemble de commutation comprenne plus de deux cellules *boost.* On précise ici qu'un nombre trop élevé de transistors augmenterait la quantité d'énergie stockée en moyenne dans le circuit. On prévoit ainsi un maximum de cinq cellules *boost* par ensemble de commutation, typiquement de 2 à 3.

Il est également envisagé d'avoir un nombre différent de cellules entre les deux ensembles de commutation. On note que cette configuration correspond aux situations de fonctionnement où un certain nombre de cellules est défaillant dans l'ensemble présentant le moins de cellules. En particulier, la configuration minimaliste prévoit un ensemble de commutation muni d'une seule cellule *boost* et l'autre ensemble de commutation muni de deux cellules *boost.* Ce circuit est ainsi tolérant à la panne dans l'une des deux cellules *boost* du même ensemble et présente des diodes à calibre réduit dans ces deux mêmes cellules (c'est-à-dire un calibre de 600 V seulement).

Cependant, on préférera avoir un nombre identique de cellules *boost* dans chacun des ensembles de commutation pour un fonctionnement équilibré.

Afin de renforcer le circuit aux défaillances, on peut prévoir l'utilisation de cellules ou ensembles de redondance. Notamment, on peut ajouter une cellule de redondance dans un ou chacun des ensembles de commutation, cette cellule *boost* redondante étant passive, c'est-à-dire en état de veille (transistor-interrupteur commandé en permanence à l'état passant), pendant le fonctionnement des autres cellules. A détection d'une défaillance d'une cellule, on substitue la cellule défaillante par cette cellule redondante. Selon la position de cette dernière dans l'ensemble de commutation, il conviendra de synchroniser les signaux de commandes des interrupteurs avec la position de chacune des cellules en fonctionnement à l'intérieur de l'ensemble de commutation.

La redondance peut également porter sur un ensemble de commutation qui vient se substituer à un des deux ensembles de commutation initiaux en cas de défaillance d'un trop grand nombre de cellules *boost* de telle sorte que le découpage ne peut pas être poursuivi. On pourra basculer d'un ensemble de commutation à l'ensemble redondant par l'utilisation, par exemple, d'un interrupteur.

On prévoit que le circuit comprend des moyens redresseurs.

Dans un mode de réalisation, les moyens redresseurs comprennent une paire de moyens redresseurs agencés pour être connectés entre ladite borne d'alimentation et respectivement chacun desdits ensembles de commutation de sorte à redresser le courant basse fréquence en entrée.

En alternative, il peut être envisagé que les moyens redresseurs comprennent des diodes de redressement prévues dans chaque cellule boost, ces diodes de redressement étant en série avec lesdits moyens interrupteurs et passantes en sens contraire de celui de la diode boost correspondante (c'est-à-dire de la même cellule).

De retour à la première alternative ci-dessus, puisque les cellules *boost* sont unidirectionnelles en courant (les ensembles de commutation étant également unidirectionnels en mettant les cellules *boost* en série dans le même sens passant), cette configuration permet de protéger chacun des ensembles de commutation des courants inverses fournis pendant une demi période de l'alimentation alternative (demi période pendant laquelle l'autre ensemble de commutation est sollicité). A cette fin, on prévoit que le système est agencé pour force à l'état passant les moyens de commutations (transistors) d'un ensemble de commutation pendant que l'autre ensemble est actif.

En particulier, chaque moyen redresseur comprend une diode, notamment mise en série dans le même sens passant que les diodes de l'ensemble de commutation auquel elle est reliée.

En alternative, chaque moyen redresseur comprend un thyristor, notamment mis en série dans le même sens passant que les diodes de l'ensemble de commutation auquel elle est reliée.

Grâce à l'utilisation d'un thyristor, il est possible d'isoler l'un des ensembles de commutation en cas de défaut dans la totalité des cellules de cet ensemble.

En outre, le thyristor présente l'intérêt de fournir un contrôle du courant pendant la phase de préchargement des capacités *boost* (à E/2 ou E/4 dans la configuration 2x2 cellules), notamment au démarrage du système comprenant le circuit.

On prévoit notamment que ces moyens redresseurs sont mis en série dans le même sens passant que les diodes de l'ensemble de commutation auquel ils sont respectivement reliés.

Dans un mode de réalisation, les moyens interrupteurs comprennent des transistors commandés.

Dans un mode de réalisation, le circuit comprend des moyens de blocage aptes à bloquer, en cas de détection d'un défaut de basse impédance dans l'une des cellules *boost,* l'ensemble des moyens interrupteurs dudit dispositif.

En particulier, la détection peut être effectuée sur les capacités flottantes (en sortie de chaque cellule *boost)* ou sur les moyens interrupteurs.

La détection de ces défauts concerne un problème général qui peut être dissocié des éléments de l'invention exposés ci-dessus. Dans ce dessein et pour les raisons exposées plus loin dans la description, il pourra être envisagé de protéger de façon distincte la solution de détection d'un défaut dans une cellule de commutation dans laquelle on ne dispose pas de deux interrupteurs commandés.

Ainsi, le circuit peut comprendre des moyens de détection d'un défaut de basse impédance dans une cellule *boost* agencés pour détecter la tension aux bornes du moyen interrupteur de la cellule pendant une durée préfixée consécutivement à une commande d'amorçage du moyen interrupteur pour détecter un défaut de la diode *boost* de la cellule ou consécutivement à une commande de blocage du moyen interrupteur pour détecter un défaut dudit moyen interrupteur.

En particulier, lesdits moyens de détection d'un défaut de basse impédance comprennent une commande de transistor couplée à un détecteur de tension.

Selon une caractéristique particulière de l'invention, on prévoit que le circuit comprend une borne d'alimentation agencée pour être reliée à la source d'alimentation.

L'invention vise également un système redresseur de puissance de courant électrique fourni par une source d'alimentation alternative polyphasée, comprenant une pluralité de circuits redresseurs de puissance comme présentés ci-dessus et agencés pour être chacun connecté à une borne d'alimentation reliée à respectivement chacune des phases du courant polyphasé, et dans lequel les circuits se partagent les mêmes capacités terminales.

On réalise ainsi un système apte à redresser un courant polyphasé, généralement bi ou tri-phasé.

L'invention vise également un système redresseur de puissance de courant électrique fourni par une source d'alimentation alternative, comprenant deux circuits redresseurs de puissance correspondants comme présentés ci-dessus et agencés pour être connectés respectivement à chacune des bornes de la source d'alimentation, et dans lequel les circuits se partagent les mêmes capacités terminales.

On réalise ainsi un système basé sur la tension différentielle aux bornes de la source d'alimentation.

En particulier, ou peut prévoir que une cellule d'un des circuits redresseurs et la cellule correspondante de l'autre circuit (c'est-à-dire ayant la même position relative dans chacun des circuits redresseurs) partagent une même capacité.

Dans un mode de réalisation où l'on mutualise un grand nombre de composants du circuit, on prévoit que les deux circuits sont confondus à l'exclusion des moyens de redressement prévus entre chacun des ensembles de commutation et les deux bornes de la source, lesdits moyens de redressement connectés à un même ensemble de commutation étant exclusifs, en sens contraire de passage du courant.

On réduit ainsi le nombre de composants du circuit différentiel et les pertes associées.

Bien entendu, si plusieurs phases sont disponibles sur la source, on combine ce système avec celui présenté ci-dessus pour une source d'alimentation alternative polyphasée. En particulier, dans le cas d'une alimentation triphasée, la configuration par tension différentielle requiert six circuits de redressement tels que présentés ci-dessus (2 circuits pour la tension différentielle pour chacune des 3 phases) se partageant tous les mêmes deux capacités terminales.

L'invention vise également un procédé de redressement de puissance d'un signal de courant électrique fourni par une source d'alimentation alternative, tel que défini par la revendication 8.

Selon l'invention, le procédé comprend une étape de détection d'un défaut de basse impédance (ou de court-circuit) dans au moins l'une desdites cellules *boost,* et suite à ladite détection, une étape de blocage desdits moyens interrupteurs des cellules *boost.* Le blocage consiste à passer les moyens interrupteurs dans une position bloquante / fermée, par opposition à la position passante / ouverte des interrupteurs. On peut ainsi appliquer une politique de blocage à partir d'un certain nombre de pannes touchant les cellules *boost,* comme défini plus loin.

Dans un mode de réalisation, on force à l'état passant les moyens interrupteurs d'un ensemble de commutation lorsque l'autre ensemble de commutation est actif sur une alternance du courant d'entrée. On évite ainsi l'application de tensions en inverse aux bornes des transistors.

De façon optionnelle, le procédé peut comprendre des étapes et mettre en oeuvre des moyens se rapportant aux caractéristiques de circuit et de système présentées ci-dessus.

L'invention vise également un aéronef comprenant un dispositif ou un système selon l'une quelconque des configurations présentées ci-dessus.

Les caractéristiques et avantages de la présente invention apparaîtront plus clairement à la lecture d'un mode préféré de réalisation illustré par les dessins joints, dans lesquels :
- la **figure 1** représente un circuit double-boost trois niveaux AC/DC de l'art antérieur;
- les **figures 2a** et **2b** sont deux représentations équivalentes d'un circuit redresseur multi-niveaux de type SMC de l'art antérieur;
- les **figures 3a** et **3b** sont deux représentations équivalentes d'un exemple de réalisation du circuit redresseur de puissance conforme à la présente invention;
- la **figure 4** illustre le comportement électrique du circuit des **figures 3** en cas de défaut de faible impédance d'un des interrupteurs (transistors) le composant;
- la **figure 5** illustre le comportement électrique du circuit des **figures 3** en cas de blocage du circuit suite à un défaut de faible impédance d'un des interrupteurs;
- la **figure 6** illustre un exemple de système différentiel redresseur de puissance utilisant le circuit des **figures 3****;**

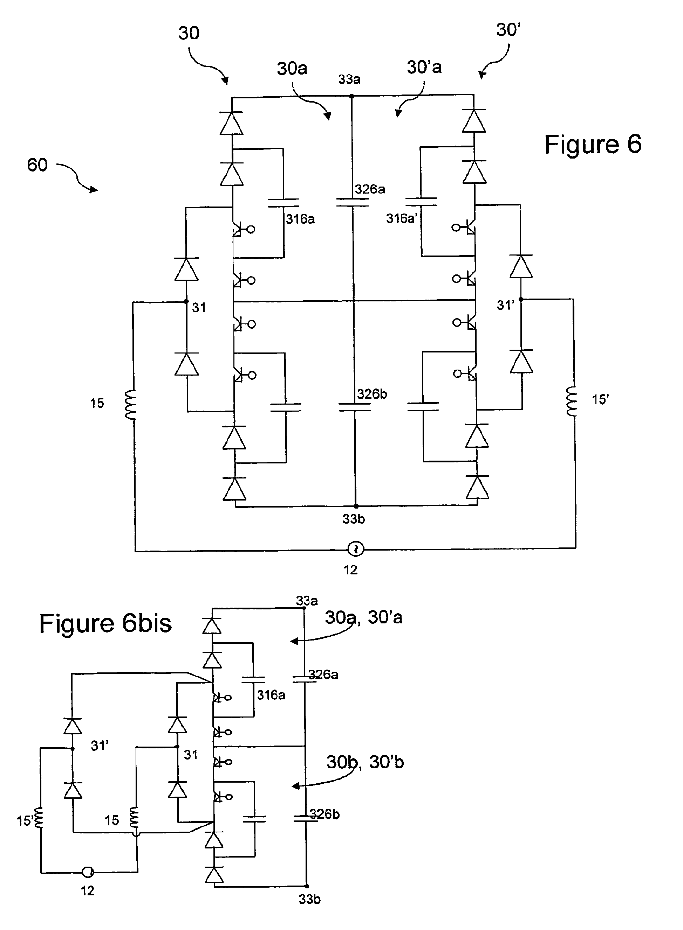

- la **figure 6bis** représente une configuration particulière du circuit de la **figure 6****,** dans lequel une mutualisation maximale des composants est effectuée;

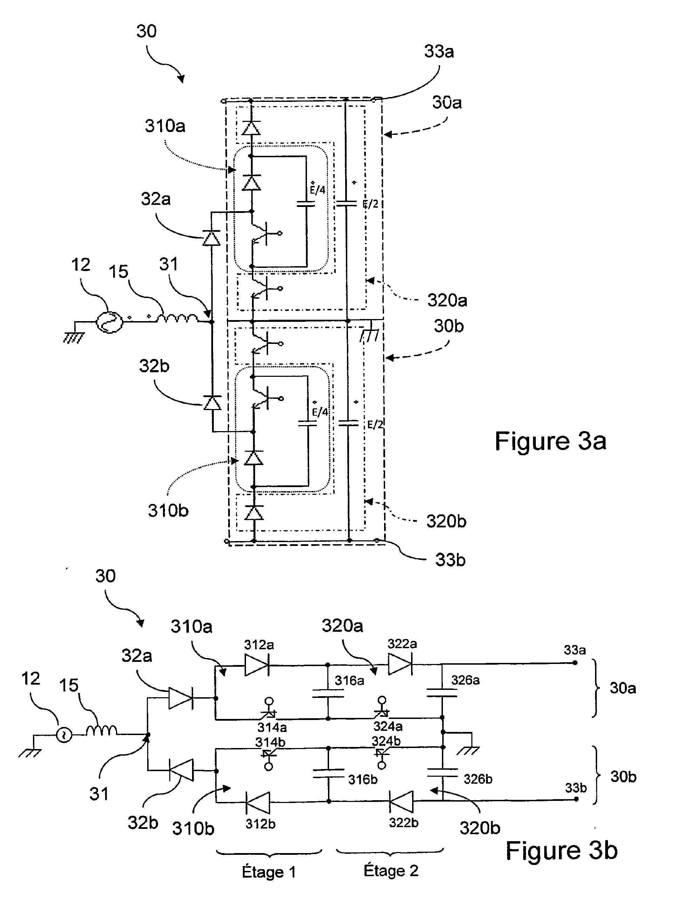

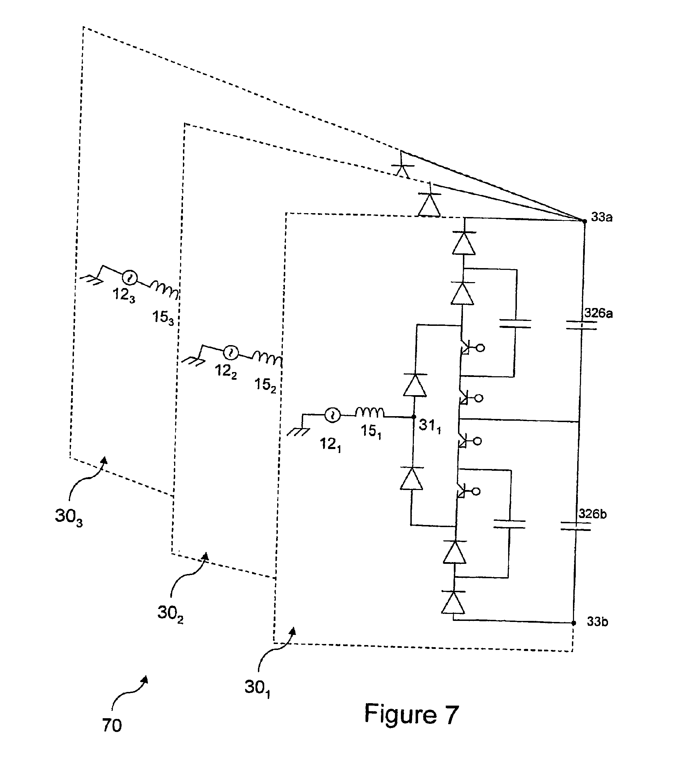

- la **figure 7** illustre un exemple de système redresseur de puissance d'une alimentation triphasée utilisant le circuit des **figures 3****;** et

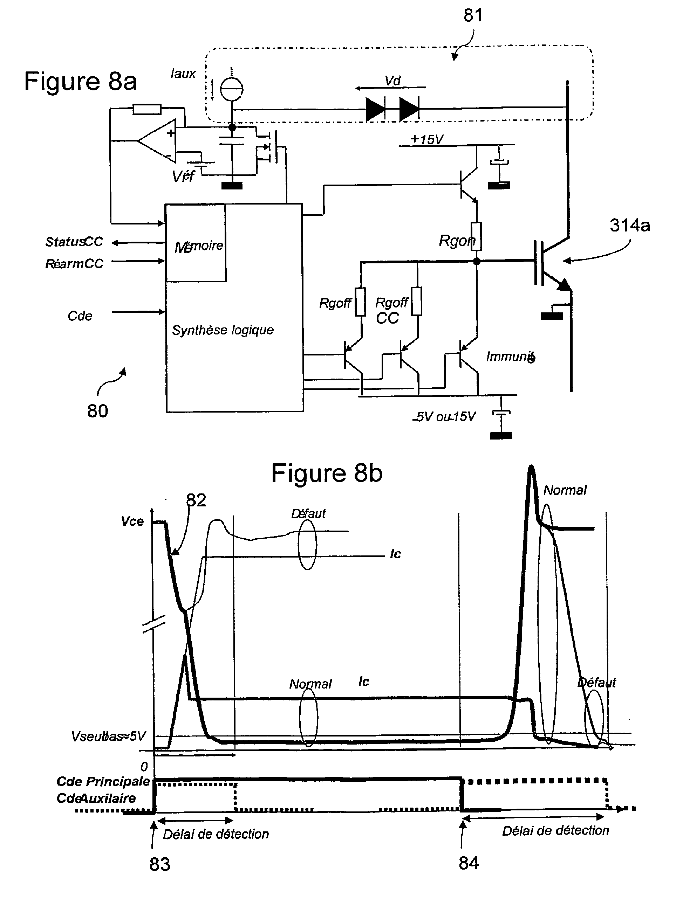

- les **figures 8a** et **8b** illustrent respectivement un moyen de détection d'une défaillance de faible impédance aux bornes d'un transistor des **figures 3** et la tension aux bornes de ce transistor pour détecter cette défaillance.

Comme déjà précisé ci-dessus, un exemple de réalisation du circuit redresseur 30 conforme à l'invention et tel qu'illustré par les **figures 3****,** s'appuie sur le circuit de commutation "double-boost 3 niveaux AC/DC" présenté en

### figure 1.

On a représenté un exemple de redresseur à 2x2 cellules (310a, 310b, 320a, 320b) imbriquées permettant de passer de 3 à 5 niveaux et de fréquence de découpage Fdec à 2xFdec par rapport au circuit de la **figure 1****.**

Le circuit des **figures 3** s'applique à une tension non différentielle en entrée. On retrouve une source de courant alternatif 12 reliée à une inductance d'entrée 15 formant une borne d'alimentation 31 pour le circuit redresseur de puissance.

En détail, sur la base des deux cellules boost du circuit de la **figure 1****,** le circuit 30 présente deux ensembles distincts de commutation 30a et 30b reliés chacun à la borne d'alimentation 31 par un moyen de redressement, ici une diode de redressement 32a et 32b.

Chacun des ensembles 30a et 30b est unidirectionnel en ce qu'ils laissent passer le courant dans un sens uniquement. Les deux ensembles présentent d'ailleurs un sens opposé de passage du courant.

Les diodes de redressement 32a et 32b sont passantes dans le même sens que les ensembles de commutation 30a et 30b auxquels elles sont respectivement reliées.

Chaque ensemble de commutation 30i est composé d'au moins deux cellules boost, ici deux 310i et 320i (i=a, b), elles mêmes composées d'une diode 312i/322i, d'un interrupteur semi-conducteur commandé de type transistor 314i/324i et d'un condensateur 316i/326i. Les diodes 312i/322i d'un même ensemble 30i sont agencées dans le même sens passant.

Chaque cellule d'un étage j est connectée à une cellule d'un étage j+1 en reliant la diode et l'interrupteur de la cellule j+1 aux bornes respectives du condensateur j.

On observe qu'une cellule boost d'un étage j n'a pas de partie ou composant en commun avec la cellule boost du même étage j dans l'autre ensemble de commutation. Cette indépendance assure qu'aucun stress en tension lié au dysfonctionnement de l'une des cellules n'affecte la cellule du même étage j dans l'autre ensemble.

La diode 312i et l'interrupteur 314i de la cellule du premier étage 1 sont reliés à la diode de redressement 32i.

Chaque condensateur 326i de la cellule du dernier étage, ici l'étage 2, est relié à la borne neutre de la source AC 12 (pour un circuit non différentiel comme c'est le cas sur les **figures 3****)** par sa borne commune avec l'interrupteur 324i de la même cellule. Ainsi, ces capacités 326i dites terminales ont une borne en commun et sont connectées en série.

Chaque ensemble de commutation 30i est connecté en sortie à une borne de sortie 33i par la borne du condensateur terminal 326i commune avec la diode 322i. On relie ainsi un équipement (non représenté) à alimenter aux bornes 33i de sortie. Dans l'industrie on utilise couramment des équipements fonctionnant à une tension continue de E=800V, valeur qui d'ailleurs est intégrée dans les prochains standards aéronautiques.

Les interrupteurs commandés 314i et 324i sont pilotés par un ou plusieurs dispositifs de commande connus de l'homme du métier (non représenté, par exemple un dispositif par étage j). Pour le circuit à 2x2 cellules boost, on peut utiliser des signaux de commandes similaires à ceux exposés dans la demande susmentionnée FR-2 809 548 pour une alimentation 12 de même fréquence. Ainsi, on ne décrit pas plus en détail les mécanismes de charge et décharge des quatre condensateurs 316i et 326i par commutation des quatre interrupteurs 314i et 324i.

Le circuit permet ainsi d'obtenir des tensions côté AC (-E/2, -E/4, E/4, E/2) ainsi que le potentiel 0 au niveau de la borne commune des condensateurs terminaux 326i.

Une extrapolation de cet exemple à un circuit présentant 2xN cellules est alors aisément réalisable. Un tel circuit résultant répond également aux critères de l'invention. On se limitera cependant à 2x5 cellules. Au-delà, des pertes globales importantes au niveau des interrupteurs 314i, 324i, etc. liées à la mise en série d'un trop grand nombre de composants nuiraient aux performances du circuit.

La tension côté AC présente alors 2N+1 niveaux de tensions: -E/2N, ..., -E/4, -E/2, 0, E/2, E/4, ..., E/2N.

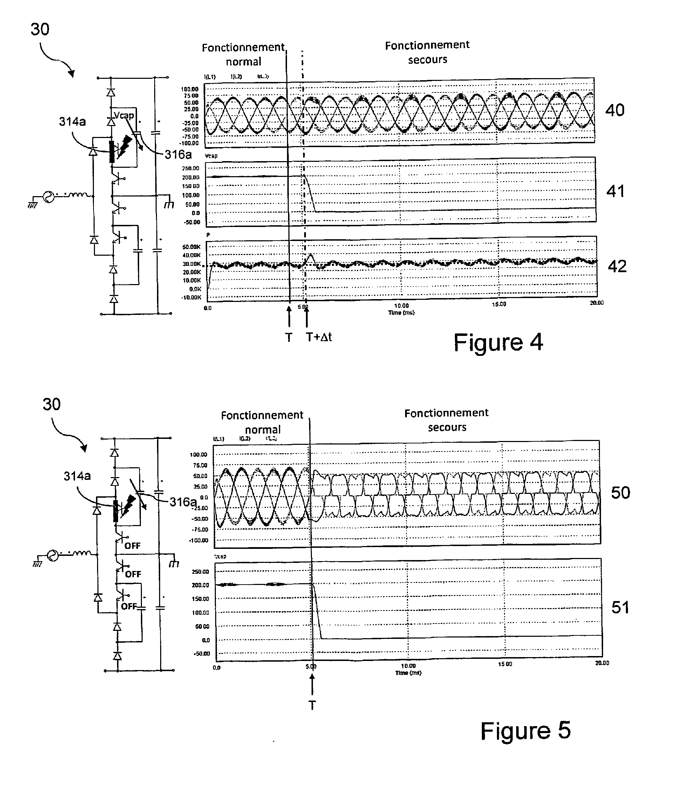

On explicite maintenant la tolérance aux pannes de basse impédance du circuit selon l'invention, en référence à la figure 4. Sur cette figure, le graphique 40 montre les courants des trois phases de la source 12 triphasée (on s'intéresse ici qu'à une seule de cette phase, celle reçu par le circuit en question) à travers les inductances d'entrée 15 correspondantes, le graphique 41 montre la tension aux bornes du condensateur 316a de la cellule défaillante et le graphique 42 montre la puissance (et donc la tension, puisque l'intensité du courant est maintenue constante par la source 12) stabilisée en sortie du circuit depuis un état non alimenté (t=0) à un état stabilisé après le défaut (jusqu'à t=20 ms).

Le transistor 314a passe en défaut de basse impédance, c'est-à-dire qu'il devient passant en permanence. Sur la **figure 4****,** ce défaut apparaît à l'instant T.

La diode 312a qui est immédiatement en série présente alors une tension à ses bornes égale à -E/4. La diode 312a devient alors bloquante et isole le défaut du bus continu DC, seule la cellule 310a concernée est naturellement mise hors service par décharge progressive du condensateur flottant 316a.

Le condensateur 316a se décharge définitivement. La tension à ses bornes chute graduellement à 0 à l'instant T+Δt à chaque période de découpage, où Δt est le temps nécessaire au passage de l'alternance concernée par le transistor défaillant afin de permettre sa décharge. En pratique, cette valeur dépend principalement des caractéristiques du condensateur 316a. L'énergie libérée par cette décharge non contrôlée est renvoyée vers le réseau (la source 12).

La diode 312a reste dans l'état bloquant, isolant la cellule boost 310a défaillante.

On constate ici que si l'interrupteur 314a est défaillant, la cellule 310b fonctionne normalement sans qu'il ne subsiste une tension substantielle aux bornes de la diode 312b.

La cellule 310a défaillante étant isolée, le découpage du courant alternatif est maintenu sur la cellule 320a contiguë moyennant une surtension d'un rapport 2 pour la diode 322a. Néanmoins, cette surtension n'est pas obligatoirement contraignante en raison de la réduction initiale du calibre de 2 par rapport à l'art antérieur, d'autant que l'on atteint au maximum un calibre de E/2, soit la tension maximale recherchée en sortie.

Cette sollicitation supplémentaire de la cellule 320a survivante au défaut résulte notamment du fait que le courant électrique associé à la tension positive (demi période de l'alternance du courant) amené par la source 12 est entièrement pris en charge par cette cellule boost 320a.

On note ici que l'ensemble de commutation 30b n'est pas affecté par cette défaillance et continue à fonctionner à 2.Fdec pour chacune des deux cellules 310b et 320b.

Naturellement, le condensateur 316a étant isolé, le circuit 30 ne travaille qu'avec 4 niveaux de tension: -E/2, -E/4, 0 et E/2.

On constate cependant que la puissance fournie en sortie est maintenue relativement constante malgré le défaut (voir graphique 42 de la figure 4). Précisément, à l'instant t+Δt, on constate une augmentation ponctuelle de la puissance en sortie liée au fait que du fait de la défaillance, la borne commune 31 subit une baisse de potentiel, entraînant une augmentation du courant de l'inductance via la baisse de tension aux bornes de cette inductance, et par conséquent un pic de puissance.

le condensateur 316a de la cellule défaillante se décharge renvoyant vers le réseau l'énergie de la cellule défaillante.

Puisque les deux ensembles de commutation 30b sont distincts, il est également possible de tolérer une panne dans l'une des deux cellules 310b et 320b. De façon générale, il est possible que les cellules boost d'un ensemble de commutation défaillent les unes après les autres. L'ensemble de commutation assure néanmoins le découpage sur l'alternance concernée du courant de source tant qu'il subsiste au moins une cellule saine.

Afin de pallier toute défaillance de l'ensemble des cellules d'un même ensemble de commutation 30i, on peut remplacer la diode de redressement basse fréquence 32i par un thyristor afin d'isoler spontanément l'ensemble de commutation au passage par zéro. On évite ainsi tout court-circuit du bus de sortie.

On illustre maintenant, en référence à la **figure 5****,** un autre mode de réalisation de réponse du circuit à un défaut de basse impédance. Ce mode de réalisation s'inscrit notamment lorsque la contrainte en surtension de ou des diodes 324a survivantes d'un ensemble de commutation 320a touché par un défaut est rédhibitoire, par exemple en raison des pertes ou des surtensions de commutation.

La **figure 5** illustre toujours le circuit (partie gauche) et présente également un graphique 50 des trois courants de phase aux bornes des inductances d'entrée 15 correspondantes et un graphique 51 de la tension aux bornes du condensateur de la cellule défaillante.

Comme sur la **figure 4****,** le circuit 30 subit un défaut de faible impédance au niveau du transistor commandé 314a à l'instant T.

Dans ce mode de réalisation, on détecte tout d'abord le défaut subi.

En référence à la **figure 8a****,** on a représenté une commande de transistor 80 couplée à un détecteur de tension 81 utilisés pour détecter les défauts dans l'une des cellules *boost.* La détection est effectuée sur la base du comportement de la tension aux bornes du transistor commandé. Ce circuit étant connu de l'homme du métier, on ne décrit pas plus en détail les composants.

Le graphique de la **figure 8b** illustre la tension aux bornes du transistor 314a mesurée par le circuit 80-81 (courbe 82 dont la partie en gras illustre le comportement normal et les parties plus fines, un comportement erroné permettant la détection d'un défaut) consécutivement à une commande de passage à l'état passant (83) et une commande de passage à l'état bloquant (84).

Tel qu'utilisé conventionnellement, ce système permet de détecter tout défaut d'un deuxième composant de la cellule *boost* dans laquelle est insérée le transistor commandé, ici 314a: on détecte, dans le cas présent, un défaut de la diode 312a.

En détail, la tension aux bornes du transistor 314a est Vce dans l'état bloquant. A l'instant 83, le transistor est mis à l'état passant. En cas de fonctionnement normal de la cellule *boost,* la tension diminue jusqu'à une valeur quasi nulle (courbe en gras). En présence d'un défaut sur la diode adjacente 312a, la tension remonte à la valeur Vce après quelques µs, typiquement 5µs. On prévoit ainsi un délai d'une dizaine de µs après la commande 83 pour détecter si la tension résultante aux bornes du transistor 314a a été modifiée (comportement normal) ou non (comportement défaillant de la diode).

Néanmoins, l'utilisation conventionnelle de ce circuit 80 ne permet pas la détection d'un défaut du transistor même 314a, notamment parce qu'aucun besoin ne s'était fait ressentir du fait que ces circuits 80 étaient généralement utilisés dans ces cellules comprenant deux transistors qui effectuaient alors une surveillance réciproque de l'un envers l'autre.

En l'absence d'un besoin de détection du transistor même, sans présence d'un deuxième transistor ayant un rôle symétrique, un objet de l'invention prévoit d'effectuer la détection du défaut sur le transistor 314a consécutivement à la commande de passage à l'état bloquant 84.

Comme visible sur la **figure 8b****,** le comportement normal du transistor (courbe en gras) consécutivement à la commande 84 tend à une tension à ses bornes de l'ordre de Vce.

En revanche, en présence d'un défaut sur le transistor, par exemple un défaut de basse impédance, ce transistor 314a ne maintient pas la tension Vce à ses bornes consécutivement à la commande 84 mais la tension aux bornes retombe à une valeur quasi nulle (courbe fine).

Le délai de détection du phénomène est d'environ 5µs. On prévoit donc une période de détection d'une dizaine de µs pour déterminer s'il n'y a pas eu de modification de la tension aux bornes du transistor consécutivement à l'application de la commande de blocage 84.

En équipant chacun des transistors d'un tel circuit 80 et de logiques de détection ad hoc, il est ainsi possible de détecter un défaut sur tout transistor du circuit 30.

A détection du défaut, le dispositif de commande des interrupteurs bloque tous les interrupteurs (en fonctionnement) du circuit 30, comme illustré par les sigles OFF sur la **figure 5****.** Comme vu ci-dessus, la détection peut également porter sur une défaillance d'une diode.

Le circuit 30 correspond alors à un redresseur à diodes simple (pont de diodes), comme illustré par la graphique 51.

Ce mode de réalisation peut être modulé en mettant en place différentes politiques de blocage des interrupteurs encore en fonctionnement selon la ou les détections réalisées, notamment le blocage de tous les interrupteurs ne peut être effectué que lorsque le nombre de transistors défaillants dans un même ensemble de commutation 30i atteint une valeur seuil. Cette dernière peut être prédéfinie de façon théorique pour définir un seuil de tension appliquée aux diodes, en tenant compte à la fois du calibrage des diodes *boost* et du nombre d'étages (puisque la surtension subie par une défaillance dépend du nombre d'étages et se cumule à la surtension subie par une seconde défaillance dans le même ensemble de commutation).

En pratique, on utilise ce mode de réalisation avec une alimentation polyphasée, par exemple triphasée (voir **figure 7****).** Dans ce cas, on bloque tous les interrupteurs commandés du circuit (d'une même phase) affecté par le défaut et la puissance de sortie du système triphasée est alors ajustée par les circuits 30₂ et 30₃ des (deux) autres phases, en particulier pour préserver la régulation du bus DC.

En référence à la **figure 6****,** on décrit maintenant l'utilisation du circuit objet de l'invention dans une approche différentielle.

Le système redresseur de puissance différentiel 60 comprend alors deux circuits 30 et 30', en particulier identiques au circuit des **figures 3****,** dont les bornes d'alimentation 31 et 31' sont reliés respectivement à une impédance d'entrée 15 et 15' reliées aux deux bornes de la source de courant alternatif 12.

Les deux circuits 30 et 30' ont leurs capacités de sorties 326a et 326b en commun, de sorte à former un unique bus de sortie du système 60 entre les bornes 33a et 33b.

On observe ici que les ensembles de commutation qui présentent une capacité commune de sortie, dits ensembles de commutation "correspondants" (par exemple 30a et 30'a), ne sont pas utilisés pendant la même alternance du courant de la source 12. On prévoit alors de mutualiser les composants de deux ensembles correspondants, cette mutualisation pouvant porter sur un ou plusieurs composants.

En particulier, selon une réalisation complémentaire, on peut envisager d'utiliser des capacités communes (316a/b, 316a'/b') pour les cellules boost "correspondantes" des deux circuits 30 et 30' ou relier en parallèle les deux capacités 316a/b, 316a'/b' des deux cellules correspondantes (ce qui diminue la taille des capacités).

La figure 6bis présente le cas de mutualisation maximale même si l'on prévoit des états intermédiaires de mutualisation. Dans cette configuration les cellules boosts des deux circuits 30 et 30' sont confondues, ce qui amène une réduction conséquente du nombre de diodes et de transistors.

Comme visible sur cette figure, chaque ensemble de commutation 30-30'a, 30-30'b est relié, par la même borne, aux deux bornes de l'alimentation via des diodes de redressement positionnées en sens contraire. On observe ainsi que les diodes reliées à un même ensemble de commutation s'excluent (sens passant opposé) de telle sorte que l'ensemble de commutation est utilisé successivement pour chacune des deux alternances du courant de source 12 via chacune des deux diodes de redressement.

Cette configuration utilise ainsi en permanence les quatre transistors commandés, les commandes appliquées étant décalées de 90° (π/2) entre ces différents transistors.

Comme indiqué précédemment, la mutualisation peut être partielle, par exemple un seul ensemble de commutation est mutualisé avec l'ensemble correspondant de l'autre circuit.

Le système différentiel ainsi obtenu présente notamment 9 niveaux de tension pour une fréquence de commande égale à 4.Fdec.

En référence à la **figure 7****,** on décrit maintenant l'utilisation du circuit objet de l'invention pour une source 12 polyphasée, en particulier triphasée, dans une approche non différentielle.

Le système redresseur de puissance pour alimentation triphasée 70 comprend trois circuits 30₁, 30₂ et 30₃, chacun similaire à celui des **figures 3****,** reliés à une phase 12₁, 12₂, 12₃ de la source d'alimentation 12.

Les trois circuits ont leurs capacités terminales 326a et 326b en commun de sorte à former un unique bus de sortie du système 70 entre les bornes 33a et 33b.

La modulation de commande des interrupteurs commandés des trois circuits est similaire. Notamment, les interrupteurs ayant une position identique respectivement dans chacun des trois circuits 30₁, 30₂ et 30₃ sont commandés par une modulation décalée du même angle que les phases de la source d'alimentation, ici sensiblement 2π/3.

Il est également possible de fournir un système différentiel redresseur de puissance pour alimentation polyphasée en appliquant le dédoublement des circuits de la **figure 6** à chacune des phases du système de la **figure 7****:** on obtient alors six circuits 30₁, 30'₁, 30₂, 30'₂, 30₃ et 30'₃

Les exemples qui précèdent ne sont que des modes de réalisation de l'invention qui ne s'y limite pas.

## Revendications

1. Circuit redresseur de puissance (30) de courant électrique fourni par une source d'alimentation alternative (12), comprenant:
- deux ensembles de commutation (30a, 30b) distincts agencés pour être connectés à une borne d'alimentation (31) de la source via des moyens redresseurs (32a, 32b),
- le circuit étant **caractérisé en ce qu'**il comprend
- une paire de moyens redresseurs (32a,32b) agencés pour être connectés entre ladite borne d'alimentation et respectivement chacun desdits ensembles de commutation de sorte à redresser le courant basse fréquence à la borne d'alimentation (31),
- chaque ensemble de commutation (30a,30b) comprenant une pluralité de cellules de commutation (310a, 310b, 320a, 320b) en cascade, dites cellules boost,
- chaque cellule boost comprenant une diode (312a, 312b, 322a, 322b) connectée entre une première borne d'entrée et une première borne de sortie de cellule, un moyen interrupteur (314a, 314b, 324a, 324b) connecté entre une deuxième borne d'entrée et une deuxième borne de sortie de cellule, et une capacité (316a, 316b, 326a, 326b) connectée entre les deux bornes de sortie de cellule,
- les cellules boost d'un ensemble de commutation étant agencées en cascade de sorte que les première et deuxième bornes de sortie d'une cellule boost sont connectées respectivement aux première et deuxième bornes d'entrée de la cellule boost suivante, les première et deuxième bornes d'entrée de la première cellule de boost de l'ensemble de commutation étant reliées aux moyens redresseurs (32a,32b) connectés à l'ensemble de commutation,
- les capacités, dites capacités terminales (326a, 326b), des deux 20 cellules boost terminales (320a, 320b) des ensembles de commutation ayant une borne en commun.

2. Circuit selon la revendication précédente, dans lequel chaque ensemble de commutation comprend deux cellules *boost.*

3. Circuit selon l'une quelconque des revendications précédentes, comprenant des moyens de blocage aptes à bloquer, en cas de détection d'un défaut de basse impédance sur l'une des cellules *boost,* l'ensemble des moyens interrupteurs dudit dispositif.

4. Circuit selon la revendication précédente, comprenant des moyens de détection d'un défaut de basse impédance dans une cellule boost (310a,b, 320a,b) agencés pour détecter la tension aux bornes du moyen interrupteur (314a,b, 324a,b) de la cellule pendant une durée préfixée consécutivement à une commande d'amorçage (83) du moyen interrupteur pour détecter un défaut de la diode *boost* (312a,b, 322a,b) de la cellule ou consécutivement à une commande de blocage (84) du moyen interrupteur pour détecter un défaut dudit moyen interrupteur.

5. Système redresseur de puissance (70) de courant électrique fourni par une source d'alimentation alternative polyphasée (12), comprenant une pluralité de circuits redresseurs de puissance (30₁, 30₂, 30₃) selon l'une quelconque des revendications précédentes agencés pour être chacun connecté à une borne d'alimentation (31₁, 31₂, 31₃) reliée à respectivement chacune des phases du courant polyphasé, et dans lequel les circuits se partagent les mêmes capacités terminales (326a, 326b).

6. Système redresseur de puissance (60) de courant électrique fourni par une source d'alimentation alternative, comprenant deux circuits redresseurs de puissance (30, 30') selon l'une quelconque des revendications 1 à 4 agencées pour être connectés respectivement à chacune des bornes de la source d'alimentation (12), et dans lequel les circuits se partagent les mêmes capacités terminales (326a, 326b).

7. Système selon la revendication précédente, dans lequel les deux circuits (30, 30') sont confondus à l'exclusion des moyens de redressement (32a,b, 32'a,b,) prévus entre chacune des bornes de la source (12) et chaque entrée des deux ensembles de commutation (30-30'a, 30-30'b), lesdits moyens de redressement connectés à une même entrée d'ensemble de commutation étant exclusifs, en sens contraire de passage du courant.

8. Procédé de redressement de puissance d'un signal de courant électrique fourni par une source d'alimentation alternative, le procédé étant réalisé par un circuit redresseur de puissance (30) selon la revendication 1,
le procédé comprenant
une étape de commande séquentielle de chacun desdits moyens interrupteurs de sorte à fournir des tensions continues aux bornes des capacités terminales,
une étape de détection d'un défaut de basse impédance ou de court-circuit dans au moins l'une desdites cellules boost ( 310a, 310b, 320a, 320b ), et
une étape de blocage desdits moyens interrupteurs ( 314a, 314b; 324a, 324b) des cellules boost.

9. Aéronef comprenant un dispositif ou un système selon l'une quelconque des revendications 1 à 7.

## Patentansprüche

1. Leistungsgleichrichterschaltung (30) für durch eine Wechselstromversorgungsquelle (12) gelieferten elektrischen Strom, umfassend:
- zwei getrennte Schaltanordnungen (30a, 30b), die dazu eingerichtet sind, an einen Stromversorgungsanschluss (31) der Quelle über Gleichrichtermittel (32a, 32b) angeschlossen zu werden,
- wobei die Schaltung **dadurch gekennzeichnet ist, dass** sie umfasst
- ein Paar von Gleichrichtermitteln (32a, 32b), die dazu eingerichtet sind, zwischen dem Stromversorgungsanschluss und jeweils einer jeden der Schaltanordnungen angeschlossen zu werden, um den Niederfrequenzstrom an dem Stromversorgungsanschluss (31) gleichzurichten,
- wobei jede Schaltanordnung (30a, 30b) eine Vielzahl von kaskadierten Schaltzellen (310a, 310b, 320a, 320b), sogenannten Boost-Zellen umfasst,
- wobei jede Boost-Zelle eine Diode (312a, 312b, 322a, 322b), die zwischen einem ersten Eingangsanschluss und einem ersten Ausgangsanschluss der Zelle angeschlossen ist, ein Schaltermittel (314a, 314b, 324a, 324b), das zwischen einem zweiten Eingangsanschluss und einem zweiten Ausgangsanschluss der Zelle angeschlossen ist, sowie eine Kapazität (316a, 316b, 326a, 326b), die zwischen den beiden Ausgangsanschlüssen der Zelle angeschlossen ist, umfasst,
- wobei die Boost-Zellen einer Schaltanordnung in Kaskade geschaltet sind, so dass der erste und der zweite Ausgangsanschluss einer Boost-Zelle an den ersten bzw. den zweiten Eingangsanschluss der folgenden Boost-Zelle angeschlossen sind, wobei der erste und der zweite Eingangsanschluss der ersten Boost-Zelle der Schaltanordnung mit den an die Schaltanordnung angeschlossenen Gleichrichtermitteln (32a, 32b) verbunden sind,
- wobei die Kapazitäten, sogenannten Abschlusskapazitäten (326a, 326b), der beiden Abschluss-Boost-Zellen (320a, 320b) der Schaltanordnungen einen gemeinsamen Anschluss haben.

2. Schaltung nach dem vorstehenden Anspruch, bei der jede Schaltanordnung zwei Boost-Zellen umfasst.

3. Schaltung nach einem der vorstehenden Ansprüche, umfassend Blockiermittel, die geeignet sind, bei Erfassen eines Niedrigimpedanzfehlers an einer der Boost-Zellen alle Schaltermittel der Vorrichtung zu blockieren.

4. Schaltung nach dem vorstehenden Anspruch, umfassend Mittel zur Erfassung eines Niedrigimpedanzfehlers in einer Boost-Zelle (310a,b, 320a,b), die dazu eingerichtet sind, die Spannung an den Anschlüssen des Schaltermittels (314a,b, 324a,b) der Zelle über eine zuvor festgelegte Dauer im Anschluss an eine Ansteuerung (83) des Schaltermittels zu erfassen, um einen Ausfall der Boost-Diode (312a,b, 322a,b) der Zelle zu erfassen oder im Anschluss an eine Steuerung zum Blockieren (84) des Schaltermittels, um einen Ausfall des Schaltermittels zu erfassen.

5. Leistungsgleichrichtersystem (70) für durch eine Mehrphasen-Wechselstromversorgungsquelle (12) gelieferten elektrischen Strom, umfassend eine Vielzahl von Leistungsgleichrichterschaltungen (30₁, 30₂, 30₃) nach einem der vorstehenden Ansprüche, die dazu eingerichtet sind, jeweils an einen Stromversorgungsanschluss (31₁, 31₂, 31₃), der jeweils mit einer jeden der Phasen des Mehrphasenstroms verbunden ist, angeschlossen zu werden, und bei dem die Schaltungen sich die gleichen Abschlusskapazitäten (326a, 326b) teilen.

6. Leistungsgleichrichtersystem (60) für durch eine Wechselstromversorgungsquelle (12) gelieferten elektrischen Strom, umfassend zwei Leistungsgleichrichterschaltungen (30, 30') nach einem der Ansprüche 1 bis 4, die dazu eingerichtet sind, jeweils an einen jeden der Anschlüsse der Stromversorgungsquelle (12) angeschlossen zu werden, und bei dem die Schaltungen sich die gleichen Abschlusskapazitäten (326a, 326b) teilen.

7. System nach dem vorstehenden Anspruch, bei dem die beiden Schaltungen (30, 30') mit Ausnahme der Gleichrichtermittel (32a,b, 32'a,b), die zwischen jedem der Anschlüsse der Quelle (12) und jedem Eingang der beiden Schaltanordnungen (30-30'a, 30-30'b) vorgesehen sind, verschmolzen sind, wobei die Gleichrichtermittel, die an einen gleichen Schaltanordnungseingang angeschlossen sind, in Bezug auf die Stromdurchlassrichtung gegensinnig sperrend sind.

8. Verfahren zur Leistungsgleichrichtung eines Signals eines durch eine Wechselstromversorgungsquelle gelieferten elektrischen Stroms, wobei das Verfahren durch eine Leistungsgleichrichterschaltung (30) nach Anspruch 1 umgesetzt wird, wobei das Verfahren umfasst
einen Schritt zur sequentiellen Steuerung eines jeden der Schaltermittel, um an die Anschlüsse der Abschlusskapazitäten Gleichspannungen zu liefern,
einen Schritt zur Erfassung eines Niederimpedanzfehlers oder von Kurzschluss in wenigstens einer der Boost-Zellen (310a, 310b, 320a, 320b), sowie
einen Schritt zum Blockieren der Schaltermittel (314a, 314b; 324a, 324b) der Boost-Zellen.

9. Luftfahrzeug, umfassend eine Vorrichtung oder ein System nach einem der Ansprüche 1 bis 7.

## Claims

1. A power rectifying circuit (30) for electrical current delivered by an alternating current source (12), comprising:
- two separate commutation assemblies (30a, 30b) arranged to be connected to a supply terminal (31) of the source using rectifying means (32a, 32b),
the circuit being **characterized in that** it comprises
- a pair of rectifying means (32a, 32b) arranged to be connected between the said supply terminal and respectively each of the said commutation assemblies so as to rectify the low-frequency input current at the said supply terminal (31),
- each commutation assembly (30a, 30b) comprising a plurality of commutation cells (310a, 310b, 320a, 320b), referred to as *boost* cells, in cascade,
- each *boost* cell comprising a diode (312a, 312b, 322a, 322b) connected between a first input terminal and a first output terminal of the cell, a switch means (314a, 314b, 324a, 324b) connected between a second input terminal and a second output terminal of the cell, and a capacitor (316a, 316b, 326a, 326b) connected between the two output terminals of the cell,
- the *boost* cells of a commutation assembly being arranged in cascade so that the first and second output terminals of one *boost* cell are connected respectively to the first and second input terminals of the following *boost* cell, the first and second input terminals of the first *boost* cell in the commutation assembly being connected to the rectifying means (32a, 32b) connected to the commutation assembly,
- the capacitors, known as terminal capacitors (326a, 326b), of the two terminal *boost* cells (320a, 320b) of the commutation assemblies having one terminal in common.

2. A circuit according to the preceding claim, wherein each commutation assembly comprises two *boost* cells.

3. A circuit according to any one of the preceding claims, comprising blocking means capable of blocking all the switch means of the said device in case of detection of a low-impedance fault in one of the *boost* cells.

4. A circuit according to the preceding claim, comprising means for detecting a low-impedance failure in a *boost* cell (310a,b, 320a,b) arranged to detect the voltage at the terminals of the switch means (314a,b, 324a,b) of the cell during a predetermined time interval following a control signal (83) to start the switch means in order to detect a fault of the *boost* diode (312a,b, 322a,b) of the cell or following a control signal (84) to block the switch means in order to detect a fault of the said switch means.

5. A power rectifying system (70) for the electrical current delivered by a multi-phase alternating current supply source (12), comprising a plurality of power rectifying circuits (30₁, 30₂, 30₃) according to any one of the preceding claims, arranged such that each can be connected to a supply terminal (31₁, 31₂, 31₃) connected to respectively each of the phases of the multi-phase current, and in which the circuits share the same terminal capacitors (326a, 326b).

6. A power rectifying system (60) for the electrical current delivered by an alternating current supply source, comprising two power rectifying circuits (30, 30') according to any one of claims 1 to 4, arranged to be connected respectively to each of the terminals of the supply source (12), and in which the circuits share the same terminal capacitors (326a, 326b).

7. A system according to the preceding claim, in which the two circuits (30, 30') are combined to the exclusion of rectifying means (32a,b, 32'a,b) provided between each of the terminals of the source (12) and each input of the two commutation assemblies (30-30'a, 30-30'b), the said rectifying means connected to a given commutation assembly being exclusive, in opposite directions of current flow.

8. A power rectifying method for an electrical current signal delivered by an alternating current supply source, the method being achieved by a power rectifying circuit (30) according to Claim 1,
the method comprising
a step of sequential control of each of the said switch means so as to deliver DC voltages to the terminals of the terminal capacitors,
a step of detecting a low-impedance fault or short circuit in at least one of the *boost* cells (310a, 310b, 320a, 320b), and
a step of blocking the switch means (314a, 314b, 324a, 324b) of the *boost* cells.

9. An aircraft comprising a device or a system according to any one of claims 1 to 7.
